# DEMANDE DE BREVET EUROPEEN

(11) **EP 1 986 398 A1**
(43) Date de publication de la demande: **29.10.2008**
(21) Numéro de dépôt: 08154415.7
(22) Date de dépôt: 11.04.2008
(51) Int. Cl.: H04L 29/06

(54) **Procédé de filtrage de flots indésirables en provenance d'un terminal présumé malveillant**

(30) Priorité: 27.04.2007 FR 0754774
(71) Demandeur: France Télécom, 75015 Paris (FR)
(72) Inventeur: Mokhtari, Amdjed, 92340, Bourg-la-Reine (FR); Laniepce, Sylvie, 14000, CAEN (FR)

(57) **Abrégé**

Procédé de filtrage de flots indésirables en provenance d'un terminal (20) présumé malveillant appartenant à un réseau de recouvrement superposé à au moins un réseau (1, 2) de communication sous-jacent, comprenant les étapes suivantes mises en oeuvre par une entité de contrôle (100, 200) de flots indésirables :
- une étape de réception d'une demande de filtrage d'au moins un flot en provenance d'un terminal (20) présumé malveillant, émise par un terminal (10) requérant appartenant au réseau de recouvrement ;
- une étape de détermination d'un noeud (30-33) d'un desdits au moins un réseau (1,2) de communication, apte à filtrer ledit flot ; et,
- une étape d'envoi au noeud déterminé d'une commande de filtrage dudit flot.

## Description

L'invention concerne une technique de filtrage de flots indésirables en provenance d'un terminal présumé malveillant appartenant à un réseau de recouvrement superposé à au moins un réseau de communication sous-jacent.

Dans un réseau de communication, plusieurs terminaux sont connectés entre eux et peuvent former un réseau de recouvrement, par exemple de type "pair-à-pair", "peer to peer" en anglais, appelé par la suite réseau P2P. Ces terminaux, appelés pairs, sont indifférenciés et possèdent des capacités et des responsabilités équivalentes dans le réseau contrairement à une architecture de type client-serveur. Le réseau de communication est sous-jacent au réseau P2P. Le réseau P2P peut également recouvrir plusieurs réseaux de communication.

Dans un réseau P2P, les pairs communiquent et se partagent des ressources, par exemple des capacités de calcul ou des éléments d'information.

Ce type de réseau repose sur des mécanismes de confiance mutuelle entre les différents pairs. Les réseaux P2P sont particulièrement vulnérables aux attaques du réseau sous-jacent, telles que des envois de données de façon répétitive à un pair. Leur vulnérabilité est également due à leurs failles de sécurité. L'ouverture par un pair aux autres pairs de fonctions telles que le partage de capacités de stockage, de capacités de traitement et de bande passante, fait d'un réseau P2P une cible facile aux pairs malveillants pour propager des contenus dangereux, tels que des virus, des vers, des données interdites ou prohibées, des messages non sollicités ("spam") ou pour utiliser de façon excessive les ressources des pairs. Afin de protéger les pairs, des techniques de gestion de la réputation ont été proposées pour ce type de réseau.

La détection de pairs égoïstes ou malveillants par les pairs d'un réseau P2P s'effectue par un partage d'appréciations formulées lors d'expériences antérieures. Chaque pair qui a effectué une transaction avec un autre pair dans le réseau P2P peut ensuite évaluer cet autre pair et partager son appréciation avec d'autres pairs. Chaque pair administre ainsi une base de données d'indices de confiance. Il peut ainsi éviter de solliciter des pairs pour lesquels l'appréciation est faible. Toutefois, il ne peut pas limiter des attaques en provenance de pairs présumés malveillants et des interactions avec de tels pairs.

Il existe donc un besoin d'une technique permettant, dans un réseau coopératif, à un pair de se protéger d'autres pairs.

L'invention répond à ce besoin en proposant un procédé de filtrage de flots indésirables en provenance d'un terminal présumé malveillant appartenant à un réseau de recouvrement superposé à au moins un réseau de communication sous-jacent, comprenant les étapes suivantes mises en oeuvre par une entité de contrôle de flots indésirables :
- une étape de réception d'une demande de filtrage d'au moins un flot en provenance d'un terminal présumé malveillant, émise par un terminal requérant appartenant au réseau de recouvrement ;
- une étape de détermination d'un noeud d'un desdits au moins un réseau de communication, apte à filtrer ledit flot ; et,
- une étape d'envoi au noeud déterminé d'une commande de filtrage dudit flot.

Un terminal requérant, après avoir identifié qu'un terminal présumé malveillant lui envoie un flot indésirable, peut demander à une entité de contrôle de filtrer un ou des flots en provenance de ce terminal présumé malveillant. L'entité de contrôle, rattachée à un réseau sous-jacent, détermine à partir des informations relatives au terminal présumé malveillant, au terminal requérant et en fonction de la topologie du réseau sous-jacent un noeud du réseau apte à filtrer le ou les flot(s) indésirable(s). Si le terminal présumé malveillant est localisé dans le même réseau sous-jacent, il peut s'agir du noeud auquel il est rattaché, c'est-à-dire le noeud qui dessert son adresse réseau, par exemple le noeud qui dessert le préfixe de son adresse IP. Si le terminal présumé malveillant est localisé dans un autre réseau de communication sous-jacent, il peut alors s'agir d'un noeud du réseau sous-jacent auquel est rattaché le terminal requérant. L'entité de contrôle transmet alors au noeud déterminé des informations relatives au flot, nécessaires au filtrage du flot. Par exemple, ces informations comprennent les adresses dans le réseau de communication sous-jacent, par exemple les adresses de type IP, et les numéros de port TCP respectifs des terminaux requérant et présumé malveillant. Le noeud déterminé filtre alors le flot indésirable à partir de ces informations. Il ne lui est pas nécessaire d'effectuer une analyse approfondie des données transmises dans les flux pour filtrer les flots. Il n'est également pas sensible à l'activation d'une fonction de protection des données telle que du chiffrement. Les ressources processeur du noeud sont ainsi préservées contrairement à des techniques d'analyse du trafic au niveau applicatif de type DPI, pour "Deep Packet Inspection", qui nécessitent une analyse en continu d'une quantité très importante de données, aussi bien de l'entête du paquet de données que des données applicatives.

En outre, le procédé comprend, préalablement à l'étape de réception d'une demande de filtrage émise par un terminal requérant, une étape d'enregistrement du terminal requérant auprès de l'entité de contrôle et lorsque le terminal requérant n'est plus enregistré auprès de ladite entité, une étape d'envoi au noeud déterminé d'une commande d'annulation du filtrage dudit flot.

Ainsi, le terminal requérant s'enregistre auprès de l'entité de contrôle des flots indésirables et obtient un identifiant de session. L'entité de contrôle peut ensuite mémoriser, associé à l'identifiant de session, l'ensemble des demandes de filtrage émises par le terminal requérant. Lors de son dé-enregistrement, l'entité de contrôle demande l'arrêt du filtrage auprès du noeud déterminé. Ainsi, le réseau de communication ne reste pas en charge de commandes de filtrage ne présentant plus d'intérêt pour le terminal requérant.

De plus, dans le cas où le terminal présumé malveillant est enregistré auprès d'une autre entité de contrôle de flots indésirables, le procédé comprend également une étape de notification de la présomption de malveillance du terminal présumé malveillant par l'entité de contrôle à ladite autre entité de contrôle.

Lorsque le terminal présumé malveillant est lui-même enregistré auprès de la même ou d'une autre entité de contrôle, il peut avoir communiqué au terminal requérant son propre identifiant de session. L'entité de contrôle notifie alors la présomption de malveillance à l'autre entité de contrôle, gérant la session avec le terminal présumé malveillant. Cette dernière mémorise, associé à l'identifiant de session du terminal présumé malveillant, la notification reçue. L'autre entité de contrôle peut alors à son tour notifier le terminal présumé malveillant, afin que celui-ci puisse rechercher une cause à cette présomption. Il peut par exemple s'agir d'une usurpation de l'adresse réseau, par exemple de l'adresse IP, du terminal présumé malveillant par un autre terminal. Ainsi, l'utilisateur du terminal présumé malveillant peut avoir une action sur la perception de sa réputation par les autres terminaux.

En outre, dans le cas où ladite autre entité de contrôle reçoit une pluralité de notifications de présomption de malveillance relatives à un terminal présumé malveillant, le procédé comprend une étape de détermination d'un noeud apte à filtrer les flots émis par le terminal présumé malveillant et une étape d'envoi audit noeud déterminé d'une commande de filtrage de l'ensemble des flots émis par le terminal présumé malveillant.

Si l'entité de contrôle du terminal présumé malveillant a reçu une pluralité de notifications émises par une ou plusieurs entités de contrôle, elle détermine un noeud apte à filtrer l'ensemble des flots émis par le terminal. Ceci permet de ne pas acheminer dans les réseaux de communication sous-jacents des flots indésirables et par conséquent, de ne pas les charger inutilement. Ceci permet également de protéger aussi bien des terminaux enregistrés auprès d'une entité de contrôle que les autres terminaux.

L'invention concerne également une entité de contrôle de flots indésirables en provenance d'un terminal présumé malveillant appartenant à un réseau de recouvrement superposé à au moins un réseau de communication sous-jacent, comprenant :
- des moyens de réception d'une demande de filtrage, agencés pour recevoir une demande de filtrage d'au moins un flot en provenance d'un terminal présumé malveillant, émise par un terminal requérant appartenant au réseau de recouvrement ;
- des moyens de détermination d'un noeud du réseau de communication, agencés pour déterminer un noeud apte à filtrer ledit flot ; et,
- des moyens d'envoi au noeud déterminé d'une commande de filtrage dudit flot.

L'invention concerne en outre un terminal appartenant à un réseau de recouvrement superposé à au moins un réseau de communication sous-jacent, comprenant :
- des moyens de détermination d'au moins un terminal présumé malveillant appartenant au réseau de recouvrement ;
- des moyens d'envoi à une entité de contrôle d'une demande de filtrage, agencés pour envoyer une demande de filtrage d'au moins un flot en provenance du terminal présumé malveillant déterminé.

L'invention concerne également un système de contrôle de flots indésirables en provenance d'un terminal présumé malveillant appartenant à un réseau de recouvrement superposé à au moins un réseau de communication sous-jacent, comprenant au moins une entité de contrôle et au moins un terminal requérant tels que décrits ci-dessus.

L'invention concerne également :
- un programme pour une entité de contrôle de flots indésirables en provenance d'un terminal présumé malveillant, comprenant des instructions de code de programme destinées à commander l'exécution de les étapes du procédé, lorsque ledit programme est exécuté par ladite entité, et
- un support d'enregistrement lisible par un dispositif sur lequel est enregistré le programme pour une entité de contrôle de flots.

L'invention sera mieux comprise à l'aide de la description suivante d'un mode de réalisation particulier du procédé de l'invention, en référence aux dessins annexés sur lesquels :
- la figure 1 représente un réseau de recouvrement superposé à au moins un réseau de communication sous-jacent ;
- la figure 2 représente les étapes du procédé tel qu'il est mis en oeuvre par une entité de contrôle de flots indésirables selon un mode particulier de réalisation de l'invention ;
- la figure 3a représente un schéma bloc fonctionnel d'une entité de contrôle de flots indésirables pour la mise en oeuvre du procédé de l'invention ;
- la figure 3b représente un schéma bloc fonctionnel d'un terminal requérant pour la mise en oeuvre du procédé de l'invention.

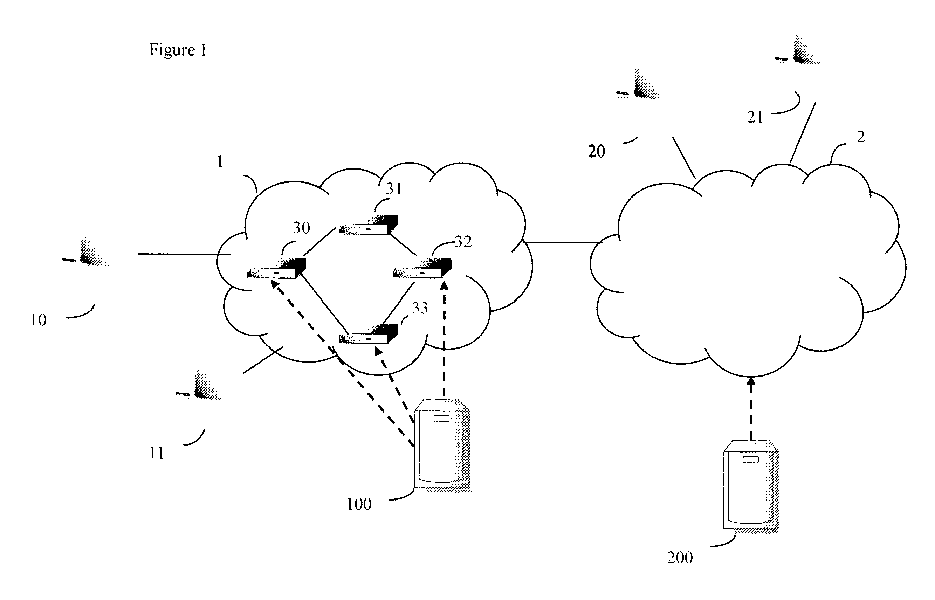

On a représenté sur la figure 1 un réseau de terminaux 10, 11, 20 et 21 superposé à deux réseaux 1, 2 de communication sous-jacents. Les terminaux 10, 11, 20 et 21 sont connectés entre eux et peuvent former un réseau de recouvrement, par exemple de type "pair-à-pair", "peer to peer" en anglais, appelé par la suite réseau P2P. Une session P2P entre un premier terminal et un deuxième terminal est identifiée par des adresses dans les réseaux de communication respectifs et par des numéros de port TCP, un par terminal. Le réseau 1 de communication comprend une pluralité de routeurs 30, 31, 32, 33 connectés entre eux et aptes à acheminer des paquets de données dans le réseau. Par souci de simplification, aucun routeur n'est représenté sur la figure 1 dans le réseau 2 de communication. Il est bien entendu qu'un tel réseau comprend également des routeurs. Au réseau 1 de communication, respectivement au réseau 2 de communication, est connectée une entité de contrôle 100 de flots indésirables, respectivement une entité 200. Les entités de contrôle 100, 200 comprennent des informations représentatives de la topologie de leur réseau de communication respectif. Ces entités de contrôle 100, 200 sont également aptes à commander des routeurs 30-33 du réseau 1, 2 de communication auquel elles appartiennent respectivement.

On rappelle qu'un flot est caractérisé par un certain nombre de caractéristiques communes à plusieurs paquets. Ces caractéristiques, ou éléments d'identification, peuvent être présentes dans différentes couches du modèle OSI pour Open Systems Interconnection model en anglais. Elles peuvent correspondre aux contenus des champs d'adresses source et/ou destination (couche 3), ou de tout autre champ dans l'entête des paquets, notamment le type de protocole (couche 3) et les numéros de port dans le cas des segments TCP ou UDP (couche 4). Par la suite, on appelle flot à destination d'un premier terminal et en provenance d'un deuxième terminal, l'ensemble des flots primaires pour lesquels l'adresse source est égale à l'adresse du deuxième terminal et l'adresse destination est égale à l'adresse du premier terminal. Un flot primaire comprend également une identification des ports TCP source et TCP destination.

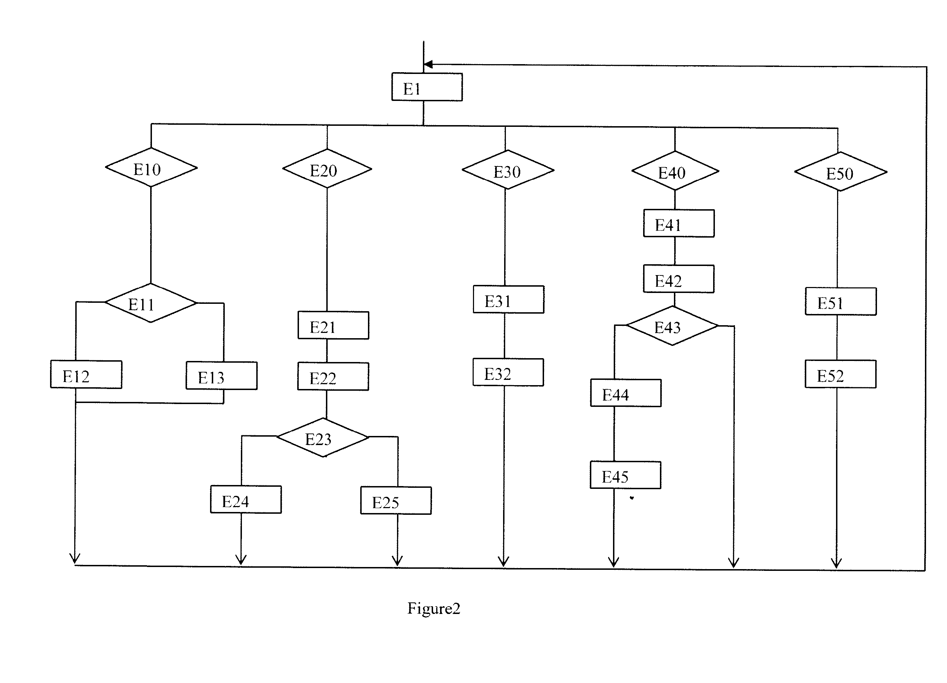

Le procédé de filtrage de flots indésirables en provenance d'un terminal présumé malveillant va maintenant être décrit en relation avec la figure 2.

Dans une première étape E1 d'attente de réception d'un message, l'entité de contrôle 100 de flots indésirables attend de recevoir un message en provenance d'un terminal ou d'une autre entité de contrôle.

Le terminal 10 souhaite s'enregistrer auprès du service de contrôle des flots malveillants. A cet effet, il envoie à l'entité de contrôle 100 des flots indésirables un message d'enregistrement comprenant une identification du terminal, par exemple son adresse dans le réseau 1 de communication ainsi que des informations nécessaires à l'entité en vue de la vérification des droits de l'utilisateur associé au terminal à accéder au service.

Dans une étape E10, l'entité de contrôle 100 vérifie que le message reçu est un message d'enregistrement. Elle vérifie dans une étape E11 si l'utilisateur du terminal a bien droit au service. Si ce n'est pas le cas, dans une étape E13, la demande d'enregistrement est rejetée par l'envoi d'un message de rejet au terminal 10 et le procédé retourne à l'étape E1 d'attente de réception d'un message. Si l'utilisateur du terminal 10 a bien droit au service, l'entité de contrôle 100 affecte un identifiant de session Id_session1 et envoie dans une étape E12 un message d'acceptation au terminal 10. L'entité de contrôle 100 crée en outre un enregistrement comprenant l'adresse du terminal 10 dans le réseau de communication et l'identifiant de session Id_session1. Le procédé retourne à l'étape E1 d'attente de réception d'un message.

De la même façon, le terminal 20 peut s'enregistrer auprès de l'entité de contrôle 200 de flots indésirables et obtenir un identifiant de session Id_session2.

A titre d'exemple, on se place au niveau du terminal 10, appelé par la suite terminal requérant.

Le terminal 10 établit une session P2P avec le terminal 20.

Si le terminal 20 est enregistré auprès d'une entité de contrôle, à l'initialisation de la session P2P, les terminaux 10 et 20 s'échangent leurs identifiants de session respectifs. Le terminal 10 transmet alors un message d'interrogation à l'entité de contrôle 100 comprenant l'adresse du terminal 20 et l'identifiant de session Id_session2.

Dans une étape E30, l'entité de contrôle 100 vérifie que le message reçu est un message d'interrogation. Elle détermine alors, dans une étape E31, l'entité de contrôle à contacter, à savoir dans l'exemple tel que décrit l'entité de contrôle 200, et l'interroge en vue de vérifier l'authenticité des informations fournies par le terminal 20. A titre d'exemple non limitatif, la structure choisie pour l'identifiant de session peut permettre de déduire l'entité de contrôle qui a alloué cet identifiant. Si le terminal 20 est effectivement enregistré auprès de l'entité 200, cette dernière transmet à l'entité 100 un message d'acquittement. L'entité 100 transmet ensuite, dans une étape E32, au terminal 10 requérant un message d'acquittement. Le procédé retourne à l'étape E1 d'attente de réception d'un message.

Le terminal 10 détecte ensuite que le terminal 20 a un comportement malveillant. A titre d'exemple illustratif, ce comportement malveillant consiste, pour le terminal 20, à utiliser de façon abusive les ressources du terminal 10.

Le terminal 10 peut gérer une base de données d'indice de confiance, qui mémorise des indices de confiance respectivement associés à des pairs du réseau P2P. Il est ainsi apte à évaluer un indice de confiance associé à un terminal, à mémoriser des indices de confiance dans sa base de données d'indices de confiance et à partager ses propres indices de confiances avec d'autres terminaux du réseau P2P. Dans ce cas, il peut mettre à jour sa propre base de données d'indices de confiance en mémorisant un indice de confiance, associé au terminal 20, défavorable.

Par ailleurs, le terminal 21 contacte le terminal 10. Toutefois, l'utilisateur du terminal 10 ne souhaite pas établir de contact avec ce terminal, par exemple en fonction d'un indice de confiance défavorable, mémorisé dans sa base de données d'indices de confiance. Cet indice de confiance peut être défavorable en raison d'expériences antérieures négatives propres ou bien d'autres pairs dits de confiance.

Par la suite, les terminaux 20 et 21 sont appelés terminaux présumés malveillants.

Le terminal 10 transmet alors à l'entité de contrôle 100 une demande de filtrage d'au moins un flot en provenance d'un ou des terminaux 20 et 21 présumés malveillants. Il peut s'agir d'une seule demande concernant les deux terminaux ou bien de deux demandes distinctes. Par la suite, on considère qu'il s'agit de demandes unitaires concernant chacune un terminal. La demande peut également concerner l'ensemble des flots en provenance du terminal présumé malveillant et à destination du terminal requérant ou bien le flot associé à la session P2P, si elle est établie, identifié par les adresses et les ports TCP respectifs des terminaux requérant et présumé malveillant. La demande de filtrage comprend l'adresse dans le réseau 2 de communication du terminal 20 ou 21 présumé malveillant. Si une session P2P est établie, la demande de filtrage comprend en outre les numéros de port respectifs des terminaux requérant et présumé malveillant. De plus, dans l'exemple choisi, le terminal 20 est enregistré auprès d'une entité de contrôle 200 et le terminal 10 requérant a obtenu lors d'une étape d'échange des identifiants l'identifiant de session Id_session2, associé au terminal 20 présumé malveillant; la demande de filtrage comprend alors également l'identifiant de session Id_session2 obtenu. Il est à noter que les adresses dans le réseau de communication et les alias utilisés dans le réseau P2P ne sont pas des données permanentes. Ainsi, un terminal présumé malveillant ne peut pas être identifié de façon permanente par son adresse dans le réseau de communication ou par son alias. De plus, les indices de confiance sont propres à chaque terminal et varient selon des critères propres au terminal également.

Il faut également noter que lorsque le terminal appartient à un réseau local et est connecté au réseau de communication par l'intermédiaire d'un équipement translateur d'adresse (NAT pour Network Address Translation), l'association de l'adresse dans le réseau, correspondant à celle de l'équipement translateur d'adresse, et du numéro de port TCP permet d'identifier de façon unique le terminal. Ainsi le filtrage des flots indésirables reste applicable même en présence des équipements translateurs d'adresse.

Dans une étape E20, l'entité 100 de contrôle vérifie que le message reçu est une demande de filtrage d'un ou de flots en provenance du terminal 20, 21 présumé malveillant, émise par un terminal 10 requérant.

Dans une étape E21, l'entité de contrôle 100 détermine à l'aide des informations reçues dans la demande de filtrage, notamment l'adresse dans le réseau 2 de communication du terminal 20, 21 présumé malveillant, un routeur 30-33 apte à filtrer le ou les flots. Dans l'exemple choisi, étant donné que le terminal 20, 21 est connecté à un réseau 2 distinct du réseau 1 auquel est rattaché le terminal 10 requérant, l'entité de contrôle 100 détermine un routeur de son propre réseau 1 de communication apte à filtrer le ou les flots en provenance du terminal 20 présumé malveillant, à l'aide des informations relatives à la topologie du réseau 1, de l'adresse du terminal 20 ou 21 présumé malveillant et également de l'adresse dans le réseau 1 de communication du terminal 10 requérant. Il peut s'agir d'un routeur 30 acheminant l'ensemble des flots à destination du terminal 10 requérant. Il peut également s'agir de routeurs acheminant les flots en provenance du réseau 2 de communication.

Dans une étape E22, l'entité 100 envoie au routeur déterminé une commande de filtrage du ou des flots et mémorise les paramètres de celle-ci dans l'enregistrement associé à l'identifiant de session Id_session1. Il peut s'agir d'une Commande Interne de Filtrage (CIF) en tant que liste de contrôle d'accès ou ACL, pour "Access Control List", comprenant les adresses dans le réseau 2 sous-jacent du terminal 20, 21 présumé malveillant en tant que source et du terminal 10 requérant en tant que destination. Une liste de contrôle d'accès est une collection d'instructions permettant d'autoriser ou de refuser des paquets en fonction d'un certain nombre de critères, tels que l'adresse source, l'adresse de destination, le numéro de port, les protocoles de couches supérieures.

Les listes de contrôle d'accès permettent à un administrateur de gérer le trafic et d'analyser des paquets particuliers sur un routeur.

Les listes de contrôle d'accès sont associées à une interface du routeur, et tout trafic acheminé par cette interface est vérifié afin d'y déceler certaines conditions faisant partie de la liste de contrôle d'accès. Une liste de contrôle d'accès permet ainsi de contrôler le ou les flots de trafic acheminé par cette interface.

Il n'est pas nécessaire pour le routeur d'effectuer une analyse approfondie des données transmises dans les flux pour filtrer les flots. En outre, il n'est pas sensible à l'activation d'une fonction de protection des données telle que du chiffrement. Ainsi, le terminal 10 requérant ne se trouve plus importuné par un ou des flots indésirables en provenance du terminal 20, 21 présumé malveillant.

Dans une étape E23, l'entité de contrôle 100 vérifie, si le terminal 20, 21 présumé malveillant est enregistré auprès d'une autre entité de contrôle 200.

Si c'est le cas, comme dans l'exemple choisi pour le terminal 20, dans une étape E24, l'entité de contrôle 100 envoie un message de notification de présomption de malveillance du terminal 20 présumé malveillant à l'autre entité de contrôle 200. Le message de notification de présomption de malveillance comprend par exemple l'identifiant de session Id_session2 associé au terminal 20 présumé malveillant.

Si ce n'est pas le cas, comme dans l'exemple choisi pour le terminal 21, dans une étape E25, l'entité de contrôle 100 envoie un message de notification de présomption de malveillance du terminal 21 présumé malveillant à une autre entité de contrôle 200, déterminée en fonction du réseau 2 de communication auquel est rattaché le terminal 21 présumé malveillant. Le message de notification de présomption de malveillance comprend par exemple l'adresse dans le réseau 2 de communication et le numéro de port TCP associés au terminal présumé malveillant.

Le traitement effectué par une entité de contrôle 100 à la réception d'un tel message sera précisé ultérieurement. Le procédé retourne à l'étape E1 d'attente de réception d'un message.

Lorsque le terminal 10 souhaite se déconnecter du réseau P2P et ne plus être enregistré auprès du service de contrôle des flots malveillants, il envoie à l'entité de contrôle 100 des flots indésirables un message d'annulation d'enregistrement comprenant son identifiant de session Id_session1.

Dans une étape E50, l'entité de contrôle 100 vérifie que le message reçu est une annulation d'enregistrement. Dans une étape E51, elle obtient par lecture de l'enregistrement associé à l'identifiant de la session Id_session1 l'ensemble des paramètres des commandes internes de filtrage transmises à des routeurs du réseau 1 de communication et mémorisées. Dans une étape E52, elle transmet ensuite à chacun de ces routeurs une commande d'annulation du filtrage, en fonction des paramètres des commandes internes de filtrage transmises antérieurement à ce routeur, annulant ainsi la commande interne de filtrage active pour ce routeur. Le procédé retourne à l'étape E1 d'attente de réception d'un message.

Ainsi, le réseau 1 de communication ne reste pas en charge de commandes de filtrage ne présentant plus d'intérêt pour le terminal 10 requérant.

Nous allons maintenant décrire le procédé tel qu'il est mis en oeuvre par une entité de contrôle 200 recevant un message de notification de présomption de malveillance en provenance d'une autre entité de contrôle 100.

Dans une étape E40, l'entité de contrôle 200 reçoit une notification de présomption de malveillance en provenance d'une autre entité de contrôle. Si le terminal présumé malveillant est enregistré auprès de l'entité de contrôle 200, cette notification comprend, comme dans l'exemple choisi pour le terminal 20, l'identifiant de session Id_session2 associé au terminal 20 présumé malveillant. Si le terminal n'est pas enregistré auprès de l'entité de contrôle 200, cette notification comprend, comme dans l'exemple choisi pour le terminal 21, l'adresse dans le réseau 2 de communication et le numéro de port TCP associés au terminal 21 présumé malveillant.

Dans une étape E41, elle mémorise cette notification dans l'enregistrement associé à l'identifiant de session Id_session2 du terminal 20 présumé malveillant si le terminal 20 est enregistré. Dans le cas contraire, par exemple pour le terminal 21, elle mémorise cette notification dans un enregistrement associé à l'adresse dans le réseau 2 de communication reçue dans la notification.

Dans une étape E42, si le terminal 20 présumé malveillant est enregistré, elle le notifie de la réception d'une notification de présomption de malveillance le concernant. Le terminal 20, s'il est de bonne foi, peut alors déclencher des actions afin de rechercher la cause de cette notification. Il peut par exemple être la victime d'une usurpation d'adresse dans le réseau de communication sous-jacent. Ainsi, l'utilisateur du terminal 20 peut avoir une action sur la perception de sa réputation par les autres pairs.

Dans une étape E43, l'entité de contrôle 200 détermine le nombre de notifications de présomption de malveillance qu'elle a reçue pour ce terminal 20, 21 présumé malveillant et vérifie si ce nombre de notifications déterminé est supérieur à un nombre prédéterminé, par exemple de l'ordre de la dizaine. Ce nombre peut être paramétré par l'administrateur de l'entité de contrôle des flots. Si tel n'est pas le cas, le procédé retourne à l'étape E1 d'attente de réception d'un message. Si tel est le cas, dans une étape E44, l'entité de contrôle 200 détermine un routeur du réseau 2 de communication sous-jacent, apte à filtrer les flots émis par le terminal 20, 21 présumé malveillant, à l'aide des informations relatives à la topologie du réseau 2 de communication et de l'adresse dans le réseau 2 de communication du terminal 20, 21 présumé malveillant. Dans une étape E45, il envoie une commande de filtrage interne de l'ensemble des flots émis par le terminal 20 présumé malveillant. On notera que dans ce cas, le filtrage est effectué dans le réseau 2 de communication auquel est connecté le terminal 20, 21 présumé malveillant. Ceci permet d'éviter l'acheminement de flots indésirables en les filtrant au plus près de la source d'émission et sans charger d'autres réseaux de communication, tel que le réseau 1. Le procédé retourne ensuite à l'étape E1 d'attente de réception d'un message.

Le procédé a été décrit dans un contexte de réseau P2P entre des terminaux 10, 20 et 21 rattachés respectivement à des réseaux 1, 2 de communication distincts. Le procédé est aisément transposable à un contexte de réseau P2P entre des terminaux 10 et 11 rattachés au même réseau de communication 1. Dans ce cas, la notification de présomption de malveillance est une notification interne à l'entité de contrôle 100 des flots indésirables. Le procédé s'applique donc entièrement dans ce cas.

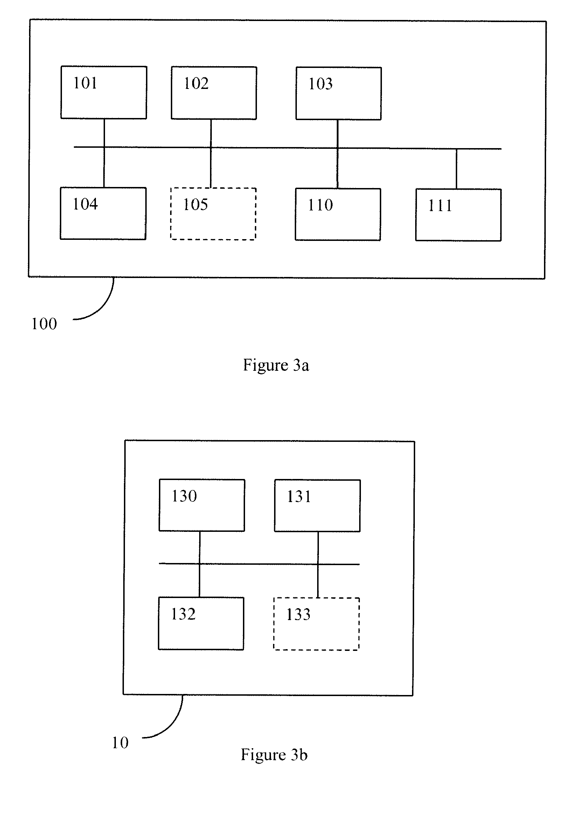

On va maintenant décrire une entité de contrôle 100 de flots indésirables en référence à la figure 3a.

Une entité de contrôle 100 de flots indésirables en provenance d'un terminal 20 présumé malveillant appartenant à un réseau de recouvrement superposé à au moins un réseau de communication sous-jacent, comprend :
- des moyens 110 de mémorisation d'informations relatives à la topologie du réseau 1 de communication ;
- un module 101 de réception d'une demande de filtrage, agencé pour recevoir une demande de filtrage d'au moins un flot en provenance d'un terminal présumé malveillant, émise par un terminal requérant appartenant au réseau de recouvrement ;
- un module 102 de détermination d'un noeud du réseau 1 de communication, agencé pour déterminer un noeud apte à filtrer le ou les flots en fonction d'une demande de filtrage reçue par le module 101 de réception ;
- un module 103 d'envoi au noeud déterminé d'une commande de filtrage d'un flot ou d'une commande d'annulation de filtrage.

L'entité de contrôle 100 peut comprendre également un module 104 d'enregistrement de terminaux requérants, agencé pour vérifier des droits d'accès au service de filtrage et pour affecter un identifiant de session à un terminal enregistré.

Elle comprend en outre des moyens 111 de mémorisation, agencés pour mémoriser des informations relatives à des demandes de filtrage émises par un terminal enregistré.

De façon optionnelle, elle comprend également un module 105 de notification de présomption de malveillance, agencé pour notifier une autre entité de contrôle de la présomption de malveillance d'un terminal enregistré auprès de l'autre entité de contrôle.

On va maintenant décrire un terminal 10 requérant en référence à la figure 3b.

Un terminal requérant appartenant à un réseau de recouvrement superposé à au moins un réseau de communication sous-jacent, comprend:
- un module 130 de connexion à un réseau de recouvrement ;
- un module 131 de détermination d'au moins un terminal présumé malveillant appartenant au réseau de recouvrement ;
- un module 132 d'envoi à une entité de contrôle de flots indésirables d'une demande de filtrage, agencé pour envoyer une demande de filtrage d'au moins un flot en provenance d'un terminal présumé malveillant déterminé par le module 131 de détermination.

Le terminal requérant peut comprendre en outre un module 133 de gestion d'indices de confiance, agencé pour évaluer un indice de confiance d'un terminal, mémoriser des indices de confiance dans une base de données d'indices de confiance et partager ses propres indices de confiances avec d'autres terminaux du réseau P2P.

L'invention concerne également un système de contrôle de flots indésirables en provenance d'un terminal présumé malveillant appartenant à un réseau de recouvrement superposé à au moins un réseau de communication sous-jacent, comprenant :
- au moins une entité de contrôle 100 telle que décrite ci-dessus ;
- au moins un terminal 10 requérant tel que décrit ci-dessus.
   Les modules 101, 102, 103, 104 et 105 qui mettent en oeuvre le procédé précédemment décrit, sont de préférence des modules logiciels comprenant des instructions logicielles pour faire exécuter les étapes du procédé précédemment décrit, mises en oeuvre par l'entité de contrôle. L'invention concerne donc aussi
- un programme pour une entité de contrôle de flots indésirables en provenance d'un terminal présumé malveillant, comprenant des instructions de code de programme destinées à commander l'exécution de les étapes du procédé, lorsque ledit programme est exécuté par ladite entité, et
- un support d'enregistrement lisible par un dispositif sur lequel est enregistré le programme pour une entité de contrôle de flots.

Les modules 131, 132, 133 qui mettent en oeuvre le procédé précédemment décrit, sont de préférence des modules logiciels comprenant des instructions logicielles, mises en oeuvre par le terminal requérant, pour déterminer au moins un terminal présumé malveillant appartenant au réseau de recouvrement, pour envoyer à une entité de contrôle de flots indésirables une demande de filtrage et pour gérer des indices de confiance, tel que décrit ci-dessus.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de filtrage de flots indésirables en provenance d'un terminal (20,21) présumé malveillant appartenant à un réseau de recouvrement superposé à au moins un réseau (1, 2) de communication sous-jacent, comprenant les étapes suivantes mises en oeuvre par une entité de contrôle (100, 200) de flots indésirables :
- une étape (E20) de réception d'une demande de filtrage d'au moins un flot en provenance d'un terminal (20, 21) présumé malveillant, émise par un terminal (10) requérant appartenant au réseau de recouvrement ;
- une étape (E23) de détermination d'un noeud (30-33) d'un desdits au moins un réseau (1,2) de communication, apte à filtrer ledit flot ; et,
- une étape (E22) d'envoi au noeud déterminé d'une commande de filtrage dudit flot.

2. Procédé selon la revendication 1, comprenant en outre, préalablement à l'étape (E20) de réception d'une demande de filtrage émise par un terminal requérant, une étape (E11) d'enregistrement du terminal (10) requérant auprès de l'entité de contrôle (100) et lorsque le terminal requérant n'est plus enregistré auprès de ladite entité, une étape (E52) d'envoi au noeud déterminé d'une commande d'annulation du filtrage dudit flot.

3. Procédé selon la revendication précédente, comprenant en outre, dans le cas où le terminal (20) présumé malveillant est enregistré auprès d'une autre entité de contrôle (200) de flots indésirables, une étape (E24) de notification de la présomption de malveillance du terminal présumé malveillant par l'entité de contrôle (100) à ladite autre entité de contrôle (200).

4. Procédé selon la revendication précédente, comprenant, dans le cas où ladite autre entité de contrôle reçoit une pluralité de notifications (E41, E43) de présomption de malveillance relatives à un terminal présumé malveillant, une étape (E44) de détermination d'un noeud apte à filtrer les flots émis par le terminal présumé malveillant et une étape (E45) d'envoi audit noeud déterminé d'une commande de filtrage de l'ensemble des flots émis par le terminal présumé malveillant.

5. Entité de contrôle (100, 200) de flots indésirables en provenance d'un terminal (20, 21) présumé malveillant appartenant à un réseau de recouvrement superposé à au moins un réseau de communication sous-jacent, comprenant :
- des moyens (101) de réception d'une demande de filtrage, agencés pour recevoir une demande de filtrage d'au moins un flot en provenance d'un terminal présumé malveillant, émise par un terminal requérant appartenant au réseau de recouvrement ;
- des moyens (102) de détermination d'un noeud du réseau de communication, agencés pour déterminer un noeud apte à filtrer ledit flot ; et,
- des moyens (103) d'envoi au noeud déterminé d'une commande de filtrage dudit flot.

6. Terminal (10) appartenant à un réseau de recouvrement superposé à au moins un réseau de communication sous-jacent, comprenant :
- des moyens (131) de détermination d'au moins un terminal présumé malveillant appartenant au réseau de recouvrement ;
- des moyens (132) d'envoi à une entité de contrôle d'une demande de filtrage, agencés pour envoyer une demande de filtrage d'au moins un flot en provenance du terminal présumé malveillant déterminé.

7. Système de contrôle de flots indésirables en provenance d'un terminal présumé malveillant appartenant à un réseau de recouvrement superposé à au moins un réseau de communication sous-jacent, comprenant :
- au moins une entité de contrôle (100, 200) selon la revendication 5 ;
- au moins un terminal (10) requérant selon la revendication 6.

8. Programme pour une entité contrôle de flots indésirables en provenance d'un terminal présumé malveillant, comprenant des instructions de code de programme destinées à commander l'exécution des étapes du procédé selon l'une des revendications 1 à 4, lorsque ledit programme est exécuté par ladite entité.

9. Support d'enregistrement lisible par un dispositif sur lequel est enregistré le programme selon la revendication 8.
